# FASCICULE DE BREVET EUROPEEN

(11) **EP 1 118 556 B1**
(45) Date de publication et mention de la délivrance du brevet: **19.03.2003**
(21) Numéro de dépôt: 00403715.6
(22) Date de dépôt: 29.12.2000
(51) Int. Cl.: B65G 1/137

(54) **Système de distribution automatique d'articles pour la préparation d'une ou plusieurs commandes de tels articles**
Automatisches Verteilsystem für Gegenstände zum Kommissionieren einer oder mehrerer Bestellunguen
Automatic dispensing system for articles for commissioning one or several orders

(30) Priorité: 21.01.2000 FR 0000783
(43) Date de publication de la demande: 25.07.2001
(73) Titulaire: Société Nationale D'Exploitation Industrielle Des Tabacs et Allumettes S.E.I.T.A., 75007 Paris (FR)
(72) Inventeur: Gouy, Jean-Claude, 69009 Lyon (FR); Guyard, Jean-Arnaud, 78000 Versailles (FR)
(74) Mandataire: Thinat, Michel

(56) Documents cités:
- DE-U- 8 907 478
- FR-A- 2 696 722
- US-A- 5 271 703

## Description

La présente invention concerne un système de distribution automatique d'articles pour la préparation d'une ou plusieurs commandes de tels articles.

Dans le domaine, on connait le document DE 89 07 478 U, et on connaît aussi par la demande de brevet internationale WO 97/23394 déposée le 18 décembre 1996 au nom de la Société KNAPP - HOLDING GMBH, une installation de préparation pour l'acheminement automatique d'articles, tels que par exemple des cartouches de paquets de cigarettes, d'une région d'accumulateurs à une station de transfert. La région d'accumulateurs est formée d'unités accumulateurs à passage continu à chacune desquelles est associé soit un éjecteur individuel, soit un éjecteur multiple. Les éjecteurs sont commandés par ordinateur pour éjecter des articles sur un transporteur collecteur auquel fait suite un système transporteur possédant des embranchements et des aiguillages correspondants et à ces embranchements font suite des branches de transport distinctes qui conduisent à des emplacements de transfert distincts situés dans la station de transfert.

Cette installation connue a pour inconvénient que les articles éjectés tombent en vrac sur le transporteur collecteur, ce qui nécessite des dispositifs déflecteurs juste en sortie du transporteur collecteur pour faire circuler plus rapidement les articles provenant du transporteur collecteur et orienter les articles avec leur longueur dans la direction du transport, compliquant considérablement la structure de l'installation déjà pourvue de moyens relativement compliqués constitués par les embranchements et les aiguillages correspondants ainsi que les branches de transport distinctes conduisant aux emplacements de transfert distincts situés dans la station de transfert.

En outre, cette installation connue nécessite l'usage d'un transporteur collecteur d'une très grande longueur et un tel transporteur ne peut traiter qu'une seule commande d'articles à la fois.

Enfin, cette installation nécessite des dispositifs compliqués d'alignement pour pouvoir encaisser correctement les articles d'une commande, ajoutant encore à la complexité de l'installation et augmentant considérablement les coûts de celle-ci.

La présente invention a pour but d'éliminer les inconvénients ci-dessus de l'installation connue en proposant un système de distribution automatique d'articles pour la préparation d'une ou plusieurs commandes des articles, qui est peu complexe et relativement peu coûteux tout en augmentant la rapidité de préparation des commandes.

A cet effet, le système de l'invention est défini dans la revendication 1. Ce système comprenant un certain nombre de magasins disposés en série les uns à la suite des autres et contenant respectivement des piles d'articles à distribuer, des éjecteurs situés respectivement sous les magasins et dont certains peuvent être pilotés pour éjecter des articles faisant partie d'une commande, et au moins un tapis roulant de collecte des articles éjectés de la commande permettant d'acheminer les articles collectés vers un emplacement d'encaissement des articles, est caractérisé en ce que les magasins et les éjecteurs associés sont divisés en deux ou plusieurs tronçons de magasins à éjecteurs et en ce qu'il comprend deux ou plusieurs tapis roulants horizontaux de collecte, d'un nombre égal à celui des tronçons de magasins, et disposés de manière étagée parallèlement les uns au-dessus des autres pour former des niveaux de tapis de collecte situés respectivement en dessous des tronçons de magasins et un dispositif ordinateur recevant des commandes d'articles à traiter et découpant chaque commande en un nombre de lots d'articles au moins égal à deux tronçons de magasins et pilotant des éjecteurs des magasins de ces tronçons de façon à déverser des articles de chaque lot de la commande sur chaque tapis roulant de collecte correspondant.

Le dispositif ordinateur découpe chaque commande en autant de lots d'articles qu'il y a de tronçons de magasins.

Le système comprend en outre un tapis roulant incliné vers le haut destiné à recevoir et regrouper les lots d'articles d'une commande provenant des tapis roulants de collecte et les envoyer sur un tapis roulant transportant les lots d'articles de la commande vers l'encaisseuse.

Chaque tapis roulant de collecte comprend à son extrémité de sortie un volet mobile commandé s'étendant transversalement au-dessus du tapis roulant et pouvant occuper une position rabattue verticale de retenue d'un lot d'articles d'une commande disposés les uns derrière les autres en ayant leur longueur orientée transversalement au tapis roulant de collecte et une position relevée de libération et de déplacement du lot d'articles vers le tapis roulant incliné.

Chaque tapis roulant de collecte comprend en outre un volet mobile intermédiaire commandé s'étendant transversalement au-dessus du tapis roulant en étant situé à la verticale passant par le milieu du tronçon de magasins correspondant de façon à réaliser deux demi-tronçons au-dessus de chaque tapis de collecte, chaque volet intermédiaire pouvant occuper une position rabattue verticale de retenue d'un lot d'articles d'une commande présents sur la partie amont du tapis roulant et une position relevée de libération et de déplacement du lot d'articles vers la sortie du tapis roulant.

Le système comprend, à chaque niveau de tapis de collecte, sauf pour le tapis de collecte du niveau le plus élevé, des tapis roulants horizontaux d'évacuation disposés en série respectivement avec les tapis de collecte pour évacuer des lots d'articles d'une commande présents sur les tapis de collecte vers le tapis roulant incliné.

Chaque tapis roulant d'évacuation comprend à sa sortie un volet mobile commandé s'étendant transversalement au-dessus du tapis roulant et pouvant occuper une position rabattue verticale de retenue d'un lot d'articles d'une commande disposés les uns derrière les autres avec leur longueur orientée transversalement au tapis roulant d'évacuation et une position relevée de libération et de déplacement du lot d'articles vers le tapis roulant incliné.

Le tapis roulant de collecte de niveau le plus élevé a sa sortie adjacente au tapis roulant incliné et comprend une rampe rabattable commandée située entre le tapis de collecte et le tapis roulant incliné pour permettre le passage, en position rabattue, d'un lot d'articles d'une commande sur le tapis roulant incliné et chaque tapis roulant d'évacuation adjacent au tapis roulant incliné comprend, sauf le tapis roulant d'évacuation de niveau le plus bas, une rampe rabattable commandée permettant, en position rabattue, le passage d'un lot d'articles d'une commande sur le tapis roulant incliné.

Le dispositif ordinateur pilote des éjecteurs des magasins des différents tronçons de magasins pour déverser respectivement sur les tapis roulants de collecte en amont de leurs volets mobiles intermédiaires rabattus, des lots d'articles d'une première commande et commande ensuite les volets mobiles intermédiaires pour les amener à leur position relevée de façon que les tapis roulants de collecte déplacent les lots d'articles de la commande vers la sortie de ces tapis où les lots d'articles sont retenus par les volets mobiles rabattus de sortie correspondants.

Le dispositif ordinateur pilote à nouveau des éjecteurs des magasins des différents tronçons de magasins pour déverser respectivement sur les tapis roulants de collecte, en amont de leurs volets mobiles intermédiaires ramenés en position rabattue, des lots d'articles d'une deuxième commande.

Le dispositif ordinateur pilote les volets de sortie des tapis roulants de collecte à leur position relevée de libération des lots d'articles de la première commande de façon que les tapis de collecte déversent les lots d'articles respectivement sur les tapis roulants d'évacuation et le dispositif ordinateur pilote ensuite les volets mobiles en sortie des tapis roulants d'évacuation à leur position relevée de libération des lots d'articles de la première commande jusqu'à ce que ces lots d'articles arrivent sur les tapis d'évacuation adjacents au tapis incliné où ils sont retenus par les volets rabattus en sortie de ces derniers tapis d'évacuation, le lot d'articles de la première commande présents sur le tapis de collecte de niveau supérieur étant retenu par le volet de sortie de ce tapis de collecte adjacent au tapis incliné.

Le dispositif ordinateur pilote successivement le volet de sortie du tapis de collecte de niveau supérieur et les volets de sortie des tapis d'évacuation adjacents au tapis incliné, ainsi que les rampes, à leur position rabattue, pour séquentiellement déposer les lots d'articles de la première commande présents sur le tapis de collecte de niveau supérieur et les tapis d'évacuation sur le tapis incliné et les regrouper sur ce dernier suivant un ordre correspondant à l'ordre de la commande, le tapis incliné ayant à son extrémité supérieure de sortie un volet mobile commandé s'étendant transversalement au-dessus de celui-ci et pouvant occuper une position rabattue verticale de retenue des lots d'articles regroupés de la première commande et une position relevée de libération et de déplacement des lots d'articles regroupés de la première commande vers l'encaisseuse.

Une fois les lots d'articles de la première commande évacués vers l'encaisseuse, le dispositif ordinateur pilote les volets mobiles intermédiaires des tapis de collecte à leur position relevée pour que ces tapis déplacent les lots d'articles de la deuxième commande jusqu'à ce qu'ils soient retenus par les volets rabattus en sortie des tapis roulants de collecte et le dispositif ordinateur pilote des éjecteurs des magasins des différents tronçons de magasins pour déverser respectivement sur les tapis roulants de collecte, en amont de leurs volets mobiles intermédiaires ramenés en position rabattue, des lots d'articles d'une troisième commande.

Le dispositif ordinateur pilote les volets de sortie des tapis roulants de collecte, les volets de sortie des tapis roulants d'évacuation des lots des articles de la deuxième commande, le volet de sortie du tapis de collecte de niveau supérieur et les volets de sortie des tapis d'évacuation adjacents au tapis incliné, ainsi que les rampes, à leur position rabattue de la même manière que pour les lots d'articles de la première commande, afin de regrouper, sur le tapis incliné, suivant un ordre correspondant à l'ordre de la commande, les lots d'articles de la deuxième commande pour les diriger ensuite vers l'encaisseuse, ce processus de pilotage des différents volets et rampes par le dispositif ordinateur étant répété pour les lots d'articles de la troisième commande et des différentes commandes suivantes.

Le dispositif ordinateur pilote les éjecteurs des différents tronçons de magasins d'une manière séquentielle pour éjecter les uns après les autres les articles de chaque lot d'une commande sur chaque tapis de collecte et le dispositif ordinateur commande le moteur d'entraînement de chaque tapis de collecte suivant une vitesse de déplacement variable afin que les articles éjectés tombent sur le tapis de collecte les uns à la suite des autres de façon proche.

Selon une variante de réalisation, le dispositif ordinateur pilote les éjecteurs des différents tronçons de magasins d'une manière simultanée pour déverser simultanément les articles de chaque lot d'une commande sur chaque tapis de collecte correspondant et commande le moteur d'entraînement de chaque tapis de collecte pour déplacer ce dernier à une vitesse fixe.

Par exemple, le système comprend quatre niveaux de tapis roulants de collecte situés respectivement en-dessous de quatre tronçons de magasins à éjecteurs disposés en série, chaque tronçon comprenant vingt éjecteurs permettant de déverser sur le tapis de collecte associé un lot d'articles, différents ou non, d'une commande.

La longueur d'un tapis roulant de collecte est supérieure à la longueur d'un tronçon correspondant de magasins.

Le système comprend trois tapis d'évacuation successifs situés en aval du tapis de collecte le plus bas, deux tapis d'évacuation successifs situés en aval du tapis de collecte au-dessus du tapis de collecte le plus bas et un tapis d'évacuation situé en aval du tapis de collecte situé en-dessous du tapis de collecte le plus haut.

Avantageusement, le dispositif ordinateur comprend un superviseur recevant les commandes d'articles de clients et les découpant chacune en lots d'articles, un ordinateur du type PC relié au superviseur et permettant de commander les éjecteurs par l'intermédiaire de cartes électroniques, un automate contrôlé par l'ordinateur destiné à commander les différents volets et rampes associés aux tapis de collecte et d'évacuation et le volet associé au tapis incliné, ainsi que les moteurs d'entraînement de ces tapis, et un autre automate contrôlé par l'ordinateur pour commander l'encaisseuse d'articles.

L'invention sera mieux comprise, et d'autres buts, caractéristiques, détails et avantages de celle-ci apparaîtront plus clairement dans la description explicative qui va suivre faite en référence aux dessins schématiques annexés donnés uniquement à titre d'exemple illustrant un mode de réalisation de l'invention et dans lesquels :
- La figure 1 représente schématiquement le système de distribution automatique d'articles pour la préparation d'une ou plusieurs commandes d'articles conforme à l'invention ;
- La figure 2 représente un exemple d'un ensemble à magasin d'articles empilés et éjecteur d'un article situé en-dessous du magasin et utilisé avec d'autres ensembles semblables dans le système de la figure 1, et
- La figure 3 est une vue détaillée de dessus d'un éjecteur d'articles.

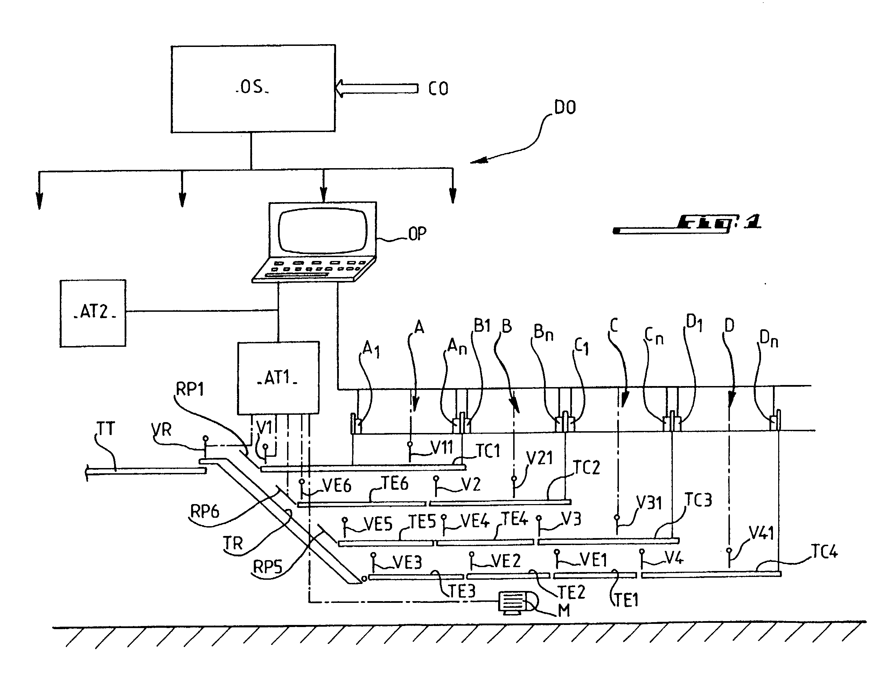

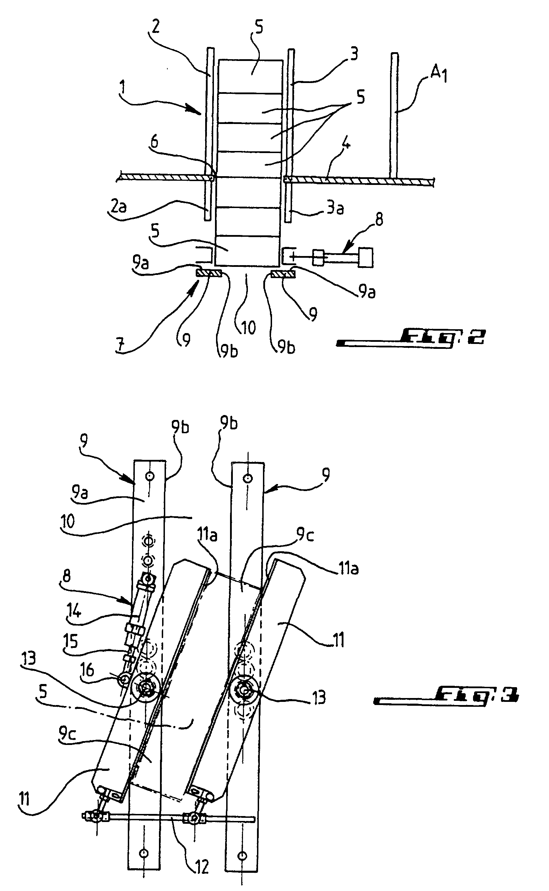

Le système de distribution automatique d'articles pour la préparation d'une ou plusieurs commandes de tels articles comprend un certain nombre de magasins disposés en séries les uns à la suite des autres pour former une chaîne continue de magasins, dont un seul est schématiquement représenté par la référence 1 en figure 2.

Chaque magasin 1 comprend deux parois verticales 2, 3 fixées sur une base de support fixe 4 et entre lesquelles est disposée une pile d'articles 5 traversant une ouverture 6 réalisée à travers la base de support 4 et d'une forme conjuguée à celle de chaque article d'une pile.

Dans le cas présent, les articles 5 sont constitués par des emballages ou cartouches sensiblement paralépipédiques de paquets de cigarettes, étant bien entendu qu'ils peuvent également être constitués par des boîtiers à cassettes audio, des boîtiers à compact disques ou analogues.

Dans le cas de cartouches de paquets de cigarettes, les cartouches 5 sont empilées les unes au-dessus des autres dans le sens de leur longueur parallèlement au deux parois verticales 2, 3 du magasin 1.

La pile d'articles 5 repose, par l'article 5 le plus bas, sur un éjecteur 7 commandé par un vérin pneumatique ou hydraulique à double effet 8 de façon à faire chuter les uns après les autres les articles inférieurs de la pile.

L'éjecteur 7 est déjà connu en soi et du genre par exemple décrit dans la demande de brevet européen n° 0 816 267 déposée le 30 juin 1997 au nom de la demanderesse.

Il suffit donc de se reporter à cette demande pour comprendre la structure et le fonctionnement de l'éjecteur 7 qui comprend un support de l'article le plus bas 5 d'une pile et est constitué de deux bras rectilignes parallèles sensiblement de même longueur 9 situés dans un même plan horizontal, les deux bras 9 étant perpendiculaires au plan de la figure 2.

Ces deux bras sont fixés à une structure de support (non représentée) et ont leurs faces supérieures planes 9a constituant une surface plane de support de l'article 5 le plus bas. Les faces latérales verticales internes mutuellement en regard 9b des deux bras 9 définissent respectivement deux bords rectilignes parallèles opposés d'une ouverture centrale 10 d'une largeur déterminée par la distance séparant les deux bras 9 et d'une étendue supérieure à la projection apparente horizontale des articles 5 empilés dans le magasin 1. De la sorte, l'ouverture 10 définie entre les bras 9 est disposée obliquement relativement aux articles empilés 5. L'article le plus bas 5 repose sur deux portions de surface plane 9c diagonalement opposées respectivement des deux bras 9 qui sont situés en-dessous du magasin 1 à une distance de celui-ci telle que l'article le plus 5 en appui sur les bras 9 soit complètement sorti du magasin 1 et les articles 5 empilés au-dessus de l'article le plus bas sont bilatéralement maintenus par deux extensions 2a, 3a des parois 2, 3 faisant saillie en-dessous de la base de support 4 de façon à empêcher tout pivotement autour d'eux-mêmes des articles empilés sur l'article le plus bas lors de l'éjection de ce dernier.

L'éjecteur 7 comprend également un mécanisme de commande du pivotement sur lui-même de l'article le plus bas 5 à partir de sa position de repos sur les deux portions de surface plane 9c des bras de support 9 à une position parallèle aux deux faces latérales verticales 9b de ces bras de façon à faire tomber par gravité cet article à travers l'ouverture centrale 10.

Ce mécanisme de commande comprend deux barres longitudinales parallèles sensiblement de même longueur 11 reliées entre elles de façon articulée à leurs extrémités avant par rapport au magasin 1 par une biellette 12 afin de constituer un parallélogramme déformable dont seul l'un des côtés, opposé la biellette 12, est manquant. Les deux barres 11 sont montées pivotantes respectivement sur les deux bras 9 par un axe de pivotement 13 solidaire du bras correspondant 9 perpendiculairement à celui-ci, les deux axes 13 étant situés au même emplacement sur les deux barres 11.

Le vérin de commande 8 a son cylindre 14 fixé de façon articulée à l'un des bras 9 et sa tige de commande 15 reliée de façon articulée à une extension 16 de la barre pivotante correspondante 11.

Le vérin de commande 8 est piloté de manière que la tige 15 occupe normalement une position rentrée dans le cylindre 14 de façon que les deux barres pivotantes 11 soient disposées obliquement aux barres 9 et laissent ainsi découvertes les deux portions de surface plane 9c des deux bras 9 de support de l'article le plus bas 5. A cette position, les faces latérales verticales internes mutuellement en regard 11a de ces barres sont situées de part et d'autre, avec jeu, de l'article le plus bas 5 en faisant face chacune à la paroi latérale correspondante de cet article reposant sur les deux bras 9.

Lorsque le vérin 8 est piloté de façon que la tige de commande 15 soit sortie du cylindre 14, les deux barres 11 pivotent simultanément pour être disposées parallèlement aux deux bras 9 au-dessus de ceux-ci avec les faces latérales verticales 11a respectivement en affleurement aligné avec les faces latérales verticales 9b des deux bras 9 pour permettre la chute par gravité de l'article le plus bas à travers l'ouverture centrale 10.

Les magasins 1 peuvent être alimentés en piles d'articles par des tapis roulants d'alimentation (non représentés) acheminant des piles successives d'articles orientées suivant la longueur perpendiculairement au sens d'avancement du tapis à un emplacement de stockage à proximité des magasins où une pile d'articles en tête des piles de stockage est transférée automatiquement, par des moyens de transfert appropriés, dans le magasin 1. L'alimentation des magasins 1 peut également être effectuée à la manière décrite dans la demande de brevet européen mentionnée ci-dessus n° 0 816 267, c'est-à-dire par des voies de roulement inclinées de haut en bas respectivement vers les magasins et chacune sensiblement parallèle aux parois latérales d'un magasin de façon que les piles d'articles présentes sur les voies de roulement glissent librement vers les magasins, dont l'une des parois est mobile pour permettre le transfert d'une pile d'articles entre les deux parois du magasin.

Les éjecteurs 7 situés respectivement sous les magasins 1 peuvent être pilotés par un dispositif ordinateur pour éjecter des articles faisant partie d'une commande sur au moins un tapis roulant de collecte permettant d'acheminer les articles collectés vers un emplacement d'encaissement de ceux-ci.

Selon l'invention, les magasins 1 d'une chaîne sont divisés en tronçons, dans le cas présent au nombre de quatre comme représenté en figure 1 et portant les référence A, B, C et D, étant bien entendu qu'il peut y en avoir moins, par exemple deux ou trois tronçons, ou plus, par exemple six.

Chaque tronçon de magasins A, B, C et D comporte plusieurs ensembles à magasins 1 et éjecteurs 7. Par exemple, chaque tronçon peut comporter vingt ensembles à magasins 1 et éjecteurs 7, soit au total quatre-vingt ensembles alignés sur la chaîne dans le cas de quatre tronçons de magasins.

Le système comprend en outre plusieurs tapis roulants horizontaux de collecte TC1, TC2, TC3 et TC4, d'un nombre n, avec n ≥ 2, n étant dans l'exemple présent égal à 4, et constitués chacun par une bande sans fin enroulée sur deux rouleaux extrêmes parallèles, dont l'un des rouleaux est entraîné par un moteur, et d'un nombre égal à celui des tronçons de magasins A-D. Autrement dit, pour quatre tronçons de magasins A-D, il y a quatre tapis roulants de collecte TC1-TC4.

Les tapis roulants de collecte TC1-TC4 sont disposés de manière étagée parallèlement les uns au-dessus des autres pour former des niveaux de tapis de collecte situés respectivement en-dessous des tronçons de magasins A-D.

La figure 1 montre que chaque tapis de collecte a une longueur supérieure à la longueur d'un tronçon associé de magasins. Ainsi, le tapis de collecte TC4 du niveau 1 le plus bas peut avoir une longueur par exemple de 17 mètres, qui est égale à la longueur du tronçon associé D augmentée de quatre mètres et il en est de même en ce qui concerne les tapis de collecte TC3 et TC2 respectivement de niveaux intermédiaires 2 et 3, le tapis TC1 de niveau supérieur 4 étant unique comme on le verra ultérieurement et ayant une longueur supérieure à 17 mètres.

Au tapis de collecte de niveau le plus bas 1 sont associés trois tapis d'évacuation en série TE1, TE2, TE3 situés dans le même plan horizontal que le tapis de collecte TC4 et chacun constitué par une bande sans fin enroulée sur deux rouleaux parallèles espacés, dont l'un est entraîné par un moteur électrique d'entraînement.

Au tapis de collecte TC3 de niveau 2, au-dessus du tapis de collecte TC4, sont associés deux tapis d'évacuation en série TE4, TE5 situés dans le même plan horizontal que le tapis de collecte TC3 et chacun constitué par une bande sans fin enroulée sur deux rouleaux parallèles espacés, dont l'un est entraîné par un moteur électrique d'entraînement.

Au tapis de collecte TC2 de niveau 2, au-dessus du tapis de collecte TC3, est associé un tapis d'évacuation TE6 en série avec le tapis de collecte TC2 en étant situé dans un même plan horizontal que ce dernier et également constitué par une bande sans fin enroulée sur deux rouleaux parallèles espacés, dont l'un est entraîné par un moteur électrique d'entraînement.

Par contre, le tapis de collecte TC1 de niveau supérieur 4 est seul et ne comporte pas de tapis d'évacuation associé en sortie de celui-ci.

Le tapis de collecte TC1, le tapis d'évacuation TE6 et les tapis d'évacuation TE5 et TE3 situés les plus en aval des tapis de collecte respectifs TC3 et TC4 ont leurs extrémités de sortie adjacentes à un tapis roulant TR incliné vers le haut et destiné à recevoir et regrouper les lots d'articles d'une commande provenant du tapis de collecte TC1 et des tapis d'évacuation TE3, TE5 et TE6 et à les envoyer sur un tapis roulant TT disposé horizontalement pour transporter les lots d'articles de la commande vers une encaisseuse (non représentée). Le tapis roulant incliné TR est également constitué par une bande sans fin enroulée sur deux rouleaux parallèles espacés respectivement inférieur et supérieur, dont l'un est entraîné par un moteur électrique d'entraînement.

De même, le tapis de transport TT est constitué par une bande sans fin enroulée sur deux rouleaux parallèles espacés, dont l'un est entraîné par un moteur électrique.

Chaque tapis roulant de collecte TC1, TC2, TC3, TC4 comprend à son extrémité de sortie située à gauche par rapport à la figure 1 si l'on considère que les articles sont déplacés par ces tapis de la droite vers la gauche au vu de cette figure, un volet mobile commandé V1, V2, V3, V4 s'étendant transversalement au-dessus du tapis roulant correspondant et pouvant occuper soit une position rabattue verticale de retenue d'un lot d'articles d'une commande, soit une position relevée de libération et de déplacement du lot d'articles de la commande vers le tapis roulant incliné TR.

Chaque volet, qui constitue ainsi une barrière, peut être constitué par une plaque rectangulaire montée pivotante sur un axe situé transversalement au-dessus de l'extrémité du tapis de collecte correspondant et pouvant pivoter de la position rabattue à la position relevée en commandant un organe d'entraînement de l'arbre, tel que par exemple un vérin rotatif ou un petit moteur électrique, accouplé à l'une des extrémités de cet arbre.

Chaque tapis roulant de collecte TC1 à TC4 comprend également un volet mobile commandé intermédiaire V11, V21, V31 et V41 identique aux volets V1 à V4 et s'étendant transversalement au-dessus du tapis roulant correspondant en ayant son axe de pivotement horizontal situé dans un plan vertical passant par le milieu du tronçon de magasins correspondant A, B, C et D de façon à réaliser deux demi-tronçons au-dessus de chaque tapis de collecte TC1 à TC4, c'est-à-dire que chaque tapis de collecte TC1 à TC4 a deux moitiés de tapis respectivement en amont et en aval du volet intermédiaire correspondant situé en-dessous du tronçon de magasins, le nombre de magasins de chaque demi-tronçon étant alors égal à dix pour vingt magasins d'un tronçon. Chaque volet V11, V21, V31 et V41 peut occuper soit une position rabattue verticale de retenue d'un lot d'articles d'une commande présents sur la partie du tapis de collecte en amont de ce volet, soit une position relevée de libération et de déplacement du lot d'articles vers la sortie du tapis de collecte où le lot d'articles est retenu par le volet de sortie correspondant V1-V4.

Chaque tapis roulant d'évacuation TE1 à TE6 comprend à sa sortie un volet mobile commandé VE1 à VE6, identique aux volets mobiles mentionnés précédemment, s'étendant transversalement au-dessus du tapis d'évacuation et pouvant occuper soit une position rabattue verticale de retenue d'un lot d'articles d'une commande, soit une position relevée de libération et de déplacement du lot d'articles vers le tapis roulant incliné TR.

Le tapis roulant de collecte TC1 et les deux tapis d'évacuation TE5 et TE6 associés respectivement aux tapis de collecte TC3 et TC2 comprennent chacun à leur sortie adjacente au tapis roulant incliné TR une rampe rabattable commandée RP1, RP6 et RP5 ainsi située entre le tapis TR et la sortie du tapis de collecte TC1 et des tapis d'évacuation TE5 et TE6, et pouvant occuper une position rabattue sensiblement horizontale permettant le passage d'un lot d'articles d'une commande sur le tapis roulant incliné TR ou une position inactive relevée comme représenté en figure 1. Le tapis d'évacuation TE3 le plus en aval du tapis de collecte TC4 ne comporte pas de rampe et a sa sortie communiquant directement sur l'extrémité inférieure du tapis incliné TR. Chaque rampe peut être constituée par une plaque s'étendant transversalement au tapis correspondant et montée pivotante autour d'un axe fixe solidaire d'une structure porteuse, un organe de commande, tel qu'un vérin rotatif ou un moteur électrique, étant prévu à l'une des extrémités de l'axe pour faire pivoter la rampe de la position relevée représentée en figure 1 à sa position rabattue sensiblement horizontale sur le tapis incliné TR.

Le tapis roulant incliné TR comprend à sa portion d'extrémité supérieure horizontale un volet mobile commandé VR, identique aux volets précédemment décrits, s'étendant transversalement à cette portion horizontale du tapis et pouvant occuper soit une position rabattue verticale à laquelle les lots d'articles d'une même commande présents sur le tapis TR sont retenus, soit une position relevée de libération des lots de cette commande pour les déverser sur le tapis de transport TT et les transporter vers l'encaisseuse.

A titre d'exemple, le tapis TR peut être incliné d'un angle d'environ 12° par rapport à l'horizontale.

La figure 1 montre également, à titre d'exemple, une architecture d'un dispositif ordinateur DO permettant de traiter les différentes commandes d'articles et de piloter les différents tronçons de magasins à éjecteurs, les différents moteurs électriques d'entraînement des tapis roulants, ainsi que les différents volets et rampes associés à ces tapis.

Ce dispositif ordinateur DO comprend un ordinateur superviseur OS pouvant recevoir des commandes d'articles passées par des débitants dans le cas où les articles sont constitués par des cartouches de cigarettes et relié à un ordinateur pilote OP du type PC associé à une chaîne de tronçons de magasins, le superviseur OS pouvant être également relié à d'autres ordinateurs pilotes d'autres chaînes à tronçons de magasins.

L'ordinateur pilote OP peut envoyer des signaux de commande à des cartes électroniques A1... An, B1... Bn, C1... Cn, D1... Dn associées respectivement aux différents magasins situés dans les différents tronçons A à D, le nombre n de cartes électroniques dans chaque tronçon étant égal au nombre de magasins du tronçon, c'est à dire que n est égal à vingt dans l'hypothèse où il y a vingt ensembles magasins et éjecteurs dans chaque tronçon. Ainsi, l'ordinateur pilote OP peut commander des éjecteurs de chaque tronçon A à D pour éjecter sur chaque tapis de collecte correspondant des articles d'une commande.

L'ordinateur pilote OP est également relié à un automate AT1 qui permet de commander, en synchronisme avec les ordres de commandes d'articles reçues par le superviseur OS, les moteurs, dont un seul est symbolisé en M en figure 1, d'entraînement des différents tapis de collecte et d'évacuation et ceux du tapis incliné TR et du tapis de transport TT, les différents volets et les différentes rampes associés aux tapis de collecte et d'évacuation.

L'ordinateur pilote OP est enfin relié à un autre automate AT2 qui commande l'encaisseuse de lots d'articles d'une commande.

Le système de distribution automatique d'articles pour la préparation de commandes fonctionne comme suit.

L'ordinateur superviseur OS reçoit les commandes CO de débitants sur le réseau téléphonique ou tout autre type de réseau et découpe chaque commande en autant de lots d'articles qu'il y a de niveaux de tapis de collecte.

L'ordinateur pilote OP, en recevant une première commande d'articles ainsi découpée, pilote, par l'intermédiaire des cartes électroniques, des éjecteurs correspondants 7 des différents tronçons A à D de façon à déverser sur chaque moitié d'un tapis collecteur TC1 à TC4 située en amont des volets correspondants V11, V21, V31, V41, des lots d'articles de la première commande, chaque lot déposé sur un tapis de collecte pouvant comporter plusieurs articles identiques ou différents et éjectés par les différents éjecteurs du demi-tronçon de magasins associés. Les éjecteurs pilotés de chaque demi-tronçon de magasins déposent les articles d'un lot sur la moitié amont du tapis de collecte correspondant de telle façon que ces articles aient leur longueur orientée perpendiculairement au sens d'avancement du tapis de collecte, de sorte que les articles d'un lot sur le tapis de collecte sont retenus les uns derrière les autres par les volets V11, V21, V31 et V41 sur le tapis de collecte correspondant qui, dans ce cas, se déplace en permanence.

Une fois les lots d'articles de la première commande déposés sur les parties des tapis de collecte TC1 à TC4 situées en amont des volets correspondants V11, V21, V31, V41, l'automate AT1 commande ces quatre volets pour les amener à leur position relevée de libération des lots d'articles respectifs qui sont déplacés par les tapis de collecte TC1 à TC4 contre les volets de sortie de ceux-ci V1, V2, V3, V4 en position rabattue de retenue de ces lots d'articles.

L'ordinateur pilote OP commande alors les volets V11, V21, V31 et V41 pour les ramener à leur position rabattue de retenue et reçoit de l'ordinateur superviseur OS la deuxième commande d'articles découpée en lots qui sont traités en parallèle suivant les tronçons concernés pour être déversés par l'intermédiaire des éjecteurs correspondants 7 pilotés par l'ordinateur pilote OP, sur les tapis de collecte concernés TC1 à TC4. Les lots d'articles de la deuxième commande sont bien entendu retenus par les volets V11, V21, V31 et V41.

L'automate AT1 commande, en parallèle au dépôt des lots d'articles de la deuxième commande sur les tapis de collecte TC1 à TC4, l'ouverture des volets de sortie V2, V3, V4 des tapis de collecte TC2, TC3, TC4, puis l'ouverture des volets VE4, VE1, VE2 des tapis d'évacuation TE4, TE1 et TE2, le volet V1 du tapis de collecte TC1 étant maintenu fermé, de façon que les lots d'articles de la première commande soient retenus par les volets extrêmes V1, VE6, VE5 et VE3 respectivement des tapis de collecte TC1 et d'évacuation TE6, TE5 et TE3. En principe, la collecte et le regroupement des lots d'articles de la première commande, ou de toute autre commande ultérieure, présents sur les quatre niveaux, s'effectuent en ouvrant tout d'abord le volet V1 du niveau supérieur 4 et abaissant la rampe RP1 de façon que le lot d'articles présents sur l'extrémité du tapis de collecte TC1 soit déplacé par ce dernier sur l'extrémité supérieure du tapis incliné TR entraîné par son moteur d'entraînement de façon que le lot d'articles du tapis TC1 vienne en butée contre le volet rabattu VR.

Une fois que le tapis de collecte TC1 est vide, l'automate AT1 commande la remontée de la rampe RP1 et la fermeture du volet V1. Ensuite, l'automate AT1 commande l'ouverture du volet VE6 et l'abaissement de la rampe RP6 de façon que le tapis d'évacuation TE6 déverse le lot d'articles de la première commande sur le tapis incliné TR qui déplace vers le haut ce lot d'articles pour les amener en appui contre le dernier article du lot précédent d'articles maintenus par le volet VR. L'automate AT1 commande alors la fermeture du volet VE6 et relève la rampe RP6 une fois que le tapis d'évacuation TE6 est vidé de son lot d'articles. L'automate AT1 commande ensuite l'ouverture du volet VE5 et l'abaissement de la rampe RP5 de façon que le tapis d'évacuation TE5 déverse le lot d'articles qu'il contient sur le tapis incliné TR qui déplace le troisième lot d'articles vers le haut pour les amener en butée contre le dernier article du deuxième lot. L'automate AT1 commande ensuite la fermeture du volet VE5 et relève la rampe RP5 une fois que le tapis d'évacuation TE5 est vidé. Enfin, l'automate AT1 commande l'ouverture du volet VE3 de façon que le tapis d'évacuation TE3 déverse le lot d'articles de la première commande qu'il contient sur le tapis incliné TR qui déplace les articles vers le haut jusqu'à ce qu'ils viennent en appui contre le dernier article du troisième lot précédemment déchargé.

L'automate AT1 commande alors l'ouverture du volet VR de façon que les lots d'articles de la première commande ainsi regroupés par le tapis incliné TR suivant l'ordre de la commande soient acheminés sur le tapis de transport TT qui déplace les lots d'articles de la première commande vers l'encaisseuse.

Bien entendu, le processus décrit ci-dessus de transfert des lots d'articles d'une commande du niveau supérieur du tapis de collecte TC1 au niveau le plus bas du tapis d'évacuation TE3 s'effectue après avoir testé, à l'aide de cellules photoélectriques appropriées reliées à l'automate AT1, que tout d'abord le tapis incliné TR est vide et que les tapis d'évacuation situés en-dessous du tapis dont il faut évacuer le lot d'articles de la commande ne sont pas en train de déverser leur contenu sur le tapis incliné TR. De même, le transfert de lots d'articles d'une commande présents sur les tapis de collecte TC1 à TC4 en aval des volets V11, V21, V31 et V41 ne peut s'effectuer qu'après avoir vérifié que les tapis d'évacuation TE1, TE4, TE6 situés juste en aval des tapis de collecte et que la partie du tapis de collecte TC1 des tapis de collecte située en aval du volet V11, sont libres, c'est-à-dire qu'ils ne comportent pas de lots d'articles d'une commande précédente, vérification pouvant être effectuée à l'aide de cellules photoélectriques appropriées reliées à l'automate AT1.

Une fois que tous les lots d'articles de la première commande ont été transférés sur le tapis incliné TR, l'automate AT1 peut commander les volets V11, V21, V31 et V41 à leur position ouverte relevée de façon que les lots d'articles de la deuxième commande présents sur les tapis de collecte TC1 à TC4 en amont de ces volets soient déplacés jusqu'à venir en butée sur les volets de sortie respectifs V1, V2, V3 et V4.

Une fois les portions des tapis de collecte TC1 à TC4 situées en amont des volets V11, V21, V31 et V41 vidées de leur contenu, ce qui peut être détecté par des cellules photoélectriques appropriées, et que l'automate AT1 a commandé les volets V11, V21, V31 et V41 à leur position fermée rabattue, l'ordinateur pilote OP commande les éjecteurs appropriés des tronçons A à D pour déverser sur les portions de tapis de collecte TC1 à TC4 en amont de ces quatre volets des lots d'articles d'une troisième commande.

Le processus de transfert sur le tapis incliné TR des lots d'articles de la deuxième commande présents sur les quatre niveaux de tapis s'effectue de la même manière que celui décrit en liaison avec le transfert des lots d'articles de la première commande et ne sera donc pas répété. Une fois les lots d'articles de la deuxième commande regroupés sur le tapis incliné TR, l'automate T1 commande alors les volets V11, V21, V31 et V41 à leur position d'ouverture de façon que les lots d'articles de la troisième commande soient amenés en butée sur les volets de sortie V1, V2, V3 et V4 des tapis de collecte TC1, TC2, TC3, TC4 et ramène ensuite les volets V11, V21, V31 et V41 à leur position rabattue de fermeture afin que l'ordinateur pilote OP commande à nouveau des éjecteurs des tronçons A à D pour déverser sur les parties des tapis de collecte TC1 à TC4 en amont des volets V11, V21, V31 et V41 des lots d'articles d'une quatrième commande et ainsi de suite.

L'ordinateur pilote OP peut commander séquentiellement des éjecteurs situés dans chaque demi-tronçon au-dessus de la partie du tapis de collecte en amont du volet correspondant V11, V21, V31 et V41 de façon que les éjecteurs éjectent les uns après les autres les articles du lot commandé tant, bien entendu, qu'il y a de la place sur la portion de tapis de collecte sous les éjecteurs. Ainsi, il sera possible de commencer l'éjection des articles du lot en pilotant le premier éjecteur situé juste avant le volet intermédiaire V11, V21, V31 ou V41 et pilotant les éjecteurs suivants en remontant dans le sens opposé au sens de déplacement du tapis de collecte correspondant, mais il sera également possible de commencer cette éjection en pilotant l'éjecteur le plus en amont par rapport au volet intermédiaire correspondant V11, V21, V31 ou V41 et pilotant ensuite les éjecteurs correspondant dans le sens descendant, c'est-à-dire dans le sens du déplacement du tapis de collecte correspondant TC1, TC2, TC3, TC4. Dans les deux cas, chaque tapis de collecte TC1 à TC4 se déplacera à une vitesse variable.

Les éjecteurs des différents tronçons peuvent être commandés en simultané par l'ordinateur pilote OP, c'est-à-dire que les éjecteurs pilotés correspondant de chaque demi-tronçon situés en amont du volet intermédiaire V11, V21, V31 et V41 éjecteront des articles en même temps et, dans ce cas, le tapis de collecte correspondant se déplacera à une vitesse fixe, par exemple de 15,6 m/mn.

Les articles peuvent être éjectés par les éjecteurs, séquentiellement ou en simultané, sur le tapis de collecte situé juste en dessous de ces éjecteurs, à raison de deux articles par seconde, en moyenne. Si les éjecteurs éjectent séquentiellement les articles, comme on l'a vu précédemment, il faut régler la vitesse du tapis afin d'avoir le moins d'espacement entre les articles et donc un taux de remplissage maximum du tapis de collecte. Si les éjecteurs fonctionnent en simultané, la vitesse du tapis de collecte est fixe. Cette vitesse est calculée en fonction de la distance entre deux éjecteurs, du nombre de produits maximum que l'on souhaite éjecter, de la cadence d'éjection de l'éjecteur et de la distance souhaitée entre deux produits tenant compte de l'encombrement de chaque produit. Chaque tapis de collecte tourne sans fin, comme déjà expliqué précédemment, afin d'accumuler les articles de deux lots respectivement de deux commandes différentes contre les volets fermés intermédiaires ou de milieu et de sortie du tapis de collecte et le tapis de collecte peut être arrêté lorsque la commande du tronçon est terminée.

La gestion des volets par l'automate AT1 permet de faire avancer les lots d'articles d'une commande successivement ou en simultané en conservant la vitesse d'ensemble et sans télescopage et une cellule de fin de tapis indique que celui-ci est vide ou plein. Dès que le tapis d'évacuation aval est vide, on libère le contenu du tapis de collecte amont. De plus, pour gagner en rapidité, il n'est pas nécessaire d'attendre que tous les articles d'un lot soient éjectés sur la portion de tapis de collecte en amont du volet correspondant V11, V21, V31 et V41 pour commencer à l'évacuer en ouvrant ce volet, à condition que la portion de tapis de collecte en aval du volet en question soit libre.

Le système a été décrit en utilisant pour chaque niveau de tapis de collecte un volet intermédiaire partageant en deux chaque tronçon de magasins, mais il est bien entendu que ce système peut fonctionner en l'absence des volets intermédiaires. Ainsi, l'ordinateur pilote OP, après avoir reçu du superviseur OS l'ordre d'une commande découpée en lots de quatre tronçons, pourra commander les éjecteurs appropriés des quatre tronçons de magasins pour déverser respectivement sur les tapis de collecte TC1 à TC4 les lot d'articles de la commande, les articles de chaque lot de la commande déversés sur chaque tapis de collecte étant entraînés par celui-ci jusqu'à venir en butée contre le volet V1, V2, V3, V4 en sortie de ce tapis. Autrement, le transfert des articles des lots respectivement sur les quatre niveaux des tapis de collecte vers le tapis incliné de regroupement TR s'effectue suivant le même processus que décrit précédemment en liaison avec la figure 1, chaque niveau de tapis de collecte et d'évacuation conduisant le lot d'articles correspondant vers le tapis de collecte TR de façon indépendante des autres niveaux de tapis de collecte et d'évacuation.

Par ailleurs, dans le but d'augmenter la cadence de préparation de commandes successives de lots d'articles, il est possible, en gardant le système décrit en figure 1, de déverser les lots d'articles d'une première commande respectivement sur les parties des tapis de collecte TC1 à TC4 situées en aval des volets intermédiaires V11, V21, V31 et V41, chaque lot d'articles de la première commande étant alors retenu par le volet de sortie correspondant V1, V2, V3, V4 du tapis de collecte TC1 à TC4 et quasiment en même temps de commander les éjecteurs des demi-tronçons situés au dessus respectivement des parties de tapis de collecte TC1 à TC4 situées en amont des volets intermédiaires V11, V21, V31 et V41 de manière à déverser sur ces parties amont respectivement des lots d'articles d'une deuxième commande, articles bien entendu retenus par chaque volet intermédiaire V11, V21, V31 et V41. Les volets V1, V2, V3, V4 et V11, V21, V31 et V41 permettent ainsi de préconstituer plusieurs lots d'aux moins deux commandes successives sur un même niveau de tapis de collecte et d'évacuation de façon à augmenter la cadence de préparation des commandes successives.

Le système a été décrit en découpant chaque commande d'articles en autant de lots d'articles qu'il y a de niveaux du tapis de collecte, ce qui suppose que chaque tronçon situé au dessus du tapis de collecte doit déverser sur celui-ci un lot d'articles, mais le système peut également fonctionner dans le cas où par exemple seuls trois des quatre tronçons de magasins ont certains de leurs éjecteurs pilotés de façon à déverser sur les tapis de collecte correspondants respectivement les lots d'articles d'une commande, les éjecteurs de l'autre tronçon de magasins n'étant pas sollicités du fait que la commande n'est pas suffisamment importante pour que le quatrième tronçon de magasin soit utilisé.

Bien entendu, la répartition des articles dans les magasins des différents tronçons ou demi-tronçons en présence des volets intermédiaires s'effectuera en fonction de leur débit dans un but d'optimisation de la chaîne. De préférence, les articles les plus courts seront transférés par les niveaux de tapis de collecte et d'évacuation le plus bas afin d'être encaissés en dernier. En effet, la logique d'encaissement d'articles veut que l'on encaisse tout d'abord les articles longs puis ensuite les articles courts qui sont disposés dans la caisse sur les articles longs.

Le système de l'invention a donné entière satisfaction en préparant une commande de deux cent articles, soit cinquante articles par tronçon dans l'hypothèse d'une répartition uniforme sur les quatre tronçons, en moins de 40 secondes et l'évacuation des articles sur le tapis de regroupement incliné TR prend environ 10 secondes.

Les avantages du système de l'invention sont les suivants :
- la rapidité de préparation de la commande puisque l'on divise chaque commande par le nombre de niveaux de tapis de collecte ou le nombre de tronçons de magasins, commandes qui peuvent ainsi être préparées en même temps ;
- chaque niveau de tapis de collecte et d'évacuation conduit les articles vers l'encaissage de façon indépendante, avec ses propres caractéristiques concernant la vitesse de déplacement des articles sur chaque niveau et les dimensions adaptées à la nature des articles concernés ;
- les produits d'un niveau peuvent se déplacer plus vite pour dépasser ou "doubler" les articles se déplaçant sur un autre niveau ;
- il est possible de modifier facilement à l'entrée de l'encaisseuse l'ordre de vidange de chaque niveau de tapis ;
- la collecte d'articles par niveau créé une réserve qui permet d'anticiper la commande suivante de sorte que le système de préparation est toujours en avance par rapport à la cadence de l'encaissage.

## Revendications

1. Système de distribution automatique d'articles (5) pour la préparation d'une ou plusieurs commandes de tels articles, comprenant un certain nombre de magasins (1) disposés en série les uns à la suite des autres et contenant respectivement des piles d'articles à distribuer, des éjecteurs (7) situés respectivement sous les magasins (1) et dont certains peuvent être pilotés pour éjecter des articles (5) faisant partie d'une commande, au moins un tapis roulant de collecte (TC1 ; TC2 ; TC3 ; TC4) des articles éjectés de la commande permettant d'acheminer les articles collectés vers un emplacement d'encaissement des articles (5), et les magasins (1) et leurs éjecteurs associés (7) étant divisés en deux ou plusieurs tronçons de magasins à éjecteurs, **caractérisé en ce qu'**il comprend deux ou plusieurs tapis roulants horizontaux de collecte (TC1, TC2, TC3, TC4), d'un nombre égal à celui des tronçons (A, B, C, D) de magasin (1), et disposés de manière étagée parallèlement les uns au-dessus des autres pour former des niveaux de tapis de collecte (TC1, TC2, TC3, TC4) situés respectivement en-dessous des tronçons de magasins (A, B, C, D) et un dispositif ordinateur (DO) recevant les commandes d'articles à traiter et découpant chaque commande en un nombre de lots d'articles au moins égal à deux tronçons de magasins et pilotant des éjecteurs (7) des magasins de ces tronçons de façon à déverser les articles de chaque lot de la commande sur chaque tapis roulant de collecte correspondant.

2. Système selon la revendication 1, **caractérisé en ce que** le dispositif ordinateur (DO) découpe chaque commande en autant de lots d'articles qu'il y a de tronçons de magasins (1).

3. Système selon la revendication 1 ou 2, **caractérisé en ce qu'**il comprend un tapis roulant (TR) incliné vers le haut, destiné à recevoir et regrouper les lots d'articles (5) d'une commande provenant des tapis roulants de collecte (TC1, TC2, TC3, TC4) et les envoyer sur un tapis roulant (TR) transportant les lots d'articles de la commande vers l'encaisseuse.

4. Système selon la revendication 3, **caractérisé en ce que** chaque tapis roulant de collecte (TC1 ; TC2 ; TC3 ; TC4) comprend à son extrémité de sortie un volet mobile commandé (V1 ; V2 ; V3 ; V4) s'étendant transversalement au-dessus du tapis roulant et pouvant occuper une position rabattue verticale de retenue d'un lot d'articles (5) d'une commande disposés les uns derrière les autres en ayant leur longueur orientée transversalement au tapis roulant et une position relevée de libération et de déplacement du lot d'articles vers le tapis roulant incliné (TR).

5. Système selon la revendication 4, **caractérisé en ce que** chaque tapis roulant de collecte (TC1, TC2, TC3, TC4) comprend un volet mobile commandé intermédiaire (V11 ; V21 ; V31; V41) s'étendant transversalement au-dessus du tapis roulant en étant situé à la verticale passant par le milieu du tronçon de magasins correspondant (A, B, C, D) de façon à réaliser deux demi-tronçons au-dessus de chaque tapis de collecte (TC1, TC2, TC3, TC4), et pouvant occuper une position rabattue verticale de retenue d'un lot d'articles d'une commande présents sur la partie amont du tapis roulant et une position relevée de libération et de déplacement du lot d'articles vers la sortie du tapis roulant.

6. Système selon la revendication 4 ou 5 **caractérisé en ce qu'**il comprend, à chaque niveau de tapis de collecte (TC2, TC3, TC4), sauf pour le tapis de collecte (TC1) de niveau le plus élevé, des tapis roulants horizontaux d'évacuation (TE6 ; TE4 ; TE5 ; TE1 ; TE2 ; TE3) disposés en série respectivement avec les tapis de collecte (TC2, TC3, TC4) pour évacuer des lots d'articles d'une commande présents sur les tapis de collecte vers le tapis roulant incliné (TR).

7. Système selon la revendication 6, **caractérisé en ce que** chaque tapis roulant d'évacuation (TE1, TE2, TE3, TE4, TE5, TE6) comprend à sa sortie un volet mobile commandé (VE1, VE2, VE3, VE4, VE5, VE6) s'étendant transversalement au-dessus du tapis roulant et pouvant occuper une position rabattue verticale de retenue d'un lot d'articles d'une commande disposés les uns derrière les autres avec leur longueur orientée transversalement au tapis roulant d'évacuation et une position relevée de libération et de déplacement du lot d'articles vers le tapis roulant incliné (TR).

8. Système selon la revendication 6 ou 7, **caractérisé en ce que** le tapis roulant de collecte de niveau le plus élevé (TC1) a sa sortie adjacente au tapis roulant incliné (TR) et comprend une rampe rabattable commandée (RR) située entre le tapis de collecte (TC1) et le tapis roulant (TR) pour permettre le passage, en position rabattue, d'un lot d'articles d'une commande sur le tapis roulant incliné (TR) et chaque tapis roulant d'évacuation (TE5 ; TE6) adjacent au tapis roulant incliné (TR), sauf le tapis roulant d'évacuation de niveau le plus bas (TE3), comprend une rampe rabattable commandée (RP5 ; RP6) permettant, en position rabattue, le passage d'un lot d'articles d'une commande sur le tapis roulant incliné (TR).

9. Système selon la revendication 7 ou 8 **caractérisé en ce que** le dispositif ordinateur (DO) pilote des éjecteurs (7) des magasins (1) des différents tronçons de magasins (A, B, C, D) pour déverser respectivement sur les tapis roulants de collecte (TC1, TC2, TC3, TC4), en amont de leurs volets mobiles intermédiaires rabattus (V11, V21, V31, V41) des lots d'articles d'une première commande et commandant ensuite les volets mobiles intermédiaires (V11, V21, V31, V41) pour les amener à leur position relevée de façon que les tapis roulants de collecte (TC1, TC2, TC3, TC4) déplacent les lots d'articles de la commande vers la sortie de ces tapis où les lots d'articles sont retenus par les volets mobiles rabattus de sortie correspondants (V1, V2, V3, V4).

10. Système selon la revendication 9, **caractérisé en ce que** le dispositif ordinateur (DO) pilote à nouveau des éjecteurs (7) des magasins (1) des différents tronçons de magasins (A, B, C, D) pour déverser respectivement sur les tapis roulants de collecte (TC1, TC2, TC3, TC4), en amont de leurs volets mobiles intermédiaires (V11, V21, V31, V41) ramenés en position rabattue, des lots d'articles d'une deuxième commande.

11. Système selon la revendication 9 ou 10, **caractérisé en ce que** le dispositif ordinateur (DO) pilote les volets de sortie (V2, V3, V4) des tapis roulants de collecte (TC2, TC3, TC4) à leur position relevée de libération des lots d'articles de la première commande de façon que les tapis de collecte (TC2, TC3, TC4) déversent les lots d'articles respectivement sur les tapis roulants d'évacuation (TE6, TE4, TE1) et le dispositif ordinateur (DO) pilote ensuite les volets mobiles (VE4, VE1, VE2) en sortie des tapis roulants d'évacuation (TE4, TE1, TE2) à leur position relevée de libération des lots d'articles de la première commande jusqu'à ce que ces lots d'articles arrivent sur les tapis d'évacuation (TE6, TE5, TE3) adjacents au tapis de regroupement incliné (TR) où ils sont retenus par les volets rabattus (VE6, VE5, VE3) en sortie de ces derniers tapis d'évacuation, le lot d'articles de la première commande présents sur le tapis de collecte de niveau supérieur (TC1) étant retenu par le volet de sortie (V1) de ce tapis de collecte adjacent au tapis de regroupement incliné (TR).

12. Système selon la revendication 11, **caractérisé en ce que** le dispositif ordinateur (DO) pilote successivement le volet de sortie (V1) du tapis de collecte de niveau supérieur (TC1) et les volets de sortie (VE6 ; VE5 ; VE3) des tapis d'évacuation (TE6 ; TES ; TE3) adjacents au tapis de regroupement incliné (TR) ainsi que les rampes (RP1 ; RP6 ; RP5) à leur position rabattue, pour séquentiellement déposer les lots d'articles de la première commande présents sur le tapis de collecte de niveau supérieur (TC1) et les tapis d'évacuation (TE6, TE5, TE3) sur le tapis incliné (TR) et les regrouper sur ce dernier suivant un ordre correspondant à l'ordre de la commande, le tapis de regroupement incliné (TR) ayant à son extrémité supérieure de sortie un volet mobile commandé (VR) s'étendant transvesalement au-dessus de celui-ci et pouvant occuper une position rabattue verticale de retenue des lots d'articles regroupés de la première commande et une position relevée de libération et de déplacement des lots d'articles regroupés de la première commande vers l'encaisseuse.

13. Système selon la revendication 12 lorsque considérée en combinaison avec la revendication 10, **caractérisé en ce que**, une fois les lots d'articles de la première commande évacués vers l'encaisseuse, le dispositif ordinateur (DO) pilote les volets mobiles intermédiaires (V11, V21 , V31, V41) des tapis de collecte (TC1, TC2, TC3, TC4) à leur position relevée pour que ces tapis déplacent les lots d'articles de la deuxième commande jusqu'à ce qu'ils soient retenus par les volets rabattus (V1, V2, V3, V4) en sortie des tapis roulants de collecte et le dispositif ordinateur (DO) pilote des éjecteurs (7) des magasins (1) des différents tronçons de magasins (A), (B), (C), (D) pour déverser respectivement sur les tapis roulants de collecte (TC1, TC2, TC3, TC4), en amont de leurs volets mobiles intermédiaires (V11, V21, V31, V41) ramenés en position rabattue, des lots d'articles d'une troisième commande.

14. Système selon la revendication 13, **caractérisé en ce que** le dispositif ordinateur (DO) pilote les volets de sortie (V2, V3, V4) des tapis roulants de collecte (TC2, TC3, TC4), les volets de sortie (VE4, VE1, VE2) des tapis roulants d'évacuation (TE4), (TE1), (TE2) des lots des articles de la deuxième commande, le volet de sortie (V1) du tapis de collecte de niveau supérieur (TC1) et les volets de sortie (VE6, VE5, VE3) des tapis d'évacuation (TE6, TE5, TE3) adjacents au tapis incliné (TR) ainsi que les rampes (RP1, RP6, RP5) à leur position rabattue, de la même manière que pour les lots d'articles de la première commande, afin de regrouper, sur le tapis incliné (TR), suivant un ordre correspondant à l'ordre de la commande, les lots d'articles (5) de la deuxième commande pour les diriger ensuite vers l'encaisseuse, ce processus de pilotage des différents volets et rampes par le dispositif ordinateur (DO) étant répété pour les lots d'articles de la troisième commande et des différentes commandes suivantes.

15. Système selon l'une des revendications précédentes, **caractérisé en ce que** le dispositif ordinateur (DO) pilote les éjecteurs (7) des différents tronçons de magasins (A, B, C, D) d'une manière séquentielle pour éjecter les uns après les autres les articles de chaque lot d'une commande sur chaque tapis de collecte (TC1, TC2, TC3, TC4) et le dispositif ordinateur (DO) commande le moteur d'entrainement (M) de chaque tapis de collecte (TC1, TC2, TC3, TC4) suivant une vitesse de déplacement variable afin que les articles à éjecter tombent sur le tapis de collecte les uns à la suite des autres de façon proche.

16. Système selon l'une des revendications 1 à 14, **caractérisé en ce que** le dispositif ordinateur (DO) pilote les éjecteurs (7) des différents tronçons de magasins (A, B, C, D) d'une manière simultanée pour déverser simultanément les articles de chaque lot d'une commande sur chaque tapis de collecte correspondant et commande le moteur d'entraînement (M) de chaque tapis de collecte (TC1, TC2, TC3, TC4) pour déplacer ce dernier à une vitesse fixe.

17. Système selon l'une des revendications précédentes, **caractérisé en ce qu'**il comprend quatre niveaux de tapis roulants de collecte (TC1, TC2, TC3, TC4) situés respectivement en-dessous de quatre tronçons (A, B, C, D) de magasins 1 à éjecteurs (7) disposés en série, chaque tronçon (A - D) comprenant vingt éjecteurs (7) permettant de déverser sur le tapis de collecte associé (TC1), (TC2), (TC3), (TC4) un lot d'articles, différents ou non, d'une commande.

18. Système selon la revendication 17, **caractérisé en ce que** la longueur d'un tapis roulant de collecte (TC1, TC2, TC3, TC4) est supérieure à la longueur d'un tronçon correspondant de magasins (A, B, C, D).

19. Système selon la revendication 17, lorsque considérée en combinaison avec la revendication 5, **caractérisé en ce qu'**il comprend trois tapis d'évacuation successifs (TE1, TE2, TE3) situés en aval du tapis de collecte le plus bas (TC4), deux tapis d'évacuation successifs (TE4, TE5) situés en aval du tapis de collecte (TC3) au-dessus du tapis de collecte le plus bas (TC4) et un tapis d'évacuation (TE6) situé en aval du tapis de collecte en-dessous du tapis de collecte de niveau le plus haut (TC1).

20. Système selon l'une des revendications précédentes, **caractérisé en ce que** le dispositif ordinateur (DO) comprend un superviseur (OS) recevant les commandes d'articles de clients et les découpant chacune en lots d'articles, un ordinateur (OP) du type (PC) relié au superviseur (OS) et permettant de commander les éjecteurs (7) par l'intermédiaire de cartes électroniques (A... An, B1...Bn, C1... Cn, D1...Dn), un automate (AT1) contrôlé par l'ordinateur (OP) et destiné à commander les différents volets et rampes associés aux tapis de collecte et d'évacuation et le volet (VR) associé au tapis incliné (TR), ainsi que les moteurs d'entraînement (M) de ces tapis, et un autre automate (AT2) contrôlé par l'ordinateur (OP) pour commander l'encaisseuse d'articles (5).

## Claims

1. System for the automatic distribution of items (5) for the preparation of one or more orders of such items, consisting of a certain number of stores (1) arranged one after another in series and containing piles of items to be distributed, some ejectors (7) situated below the stores (1) and including some which can be guided to eject items (5) forming part of an order, at least one conveyor belt (TC1, TC2, TC3, TC4) for the collection of the ejected items of the order which makes it possible to route the items collected to a location for the packaging of the items (5) and the stores (1) and their associated ejectors (7) which are divided into two or more sections of stores with ejectors, **characterised by** the fact that there are two or more horizontal collecting conveyor belts (TC1, TC2, TC3, TC4) equal to the number of sections (A, B, C, D) of store (1) and arranged in tiers parallel to each other in order to form levels of conveyor belts (TC1, TC2, TC3, TC4) situated below the sections of the stores (A, B, C, D), and a computer (DO) which receives orders for items to be processed and which divides each order into a number of batches of items which is at least equal to two sections of the stores and which guides the ejectors (7) of the stores of these sections in such a way as to discharge the items of each batch of the order on to each corresponding collecting conveyor belt.

2. System according to claim 1 **characterised by** the fact that the computer (DO) divides each order into as many batches of items as there are sections of the stores (1).

3. System according to claim 1 or 2 **characterised by** the fact that there is an upwardly inclined conveyor belt (TR) which is intended to receive and rearrange batches of items (5) of an order which originate from collecting conveyor belts (TC1, TC2, TC3, TC4) and to send them on a conveyor belt (TR) which transports the batches of items of the order to the packaging machine.

4. System according to claim 3 **characterised by** the fact that there is at the end of the exit of each collecting conveyor belt (TC1; TC2; TC3; TC4) a controlled movable flap (V1; V2; V3; V4) situated crosswise over the conveyor belt which is able to occupy a vertical lowered position in order to retain a batch of order items (5) arranged one behind the other across the conveyor belt and to occupy a raised position in order to release and move a batch of order items towards the inclined conveyor belt (TR).

5. System according to claim 4 **characterised by** the fact that each collecting conveyor belt (TC1, TC2, TC3, TC4) has an intermediate controlled movable flap (V11; V21; V31; V41) situated crosswise over the conveyor belt and vertically passing through the middle of the corresponding section of the stores (A, B, C, D) in such a way as to produce two half-sections over each collecting conveyor belt (TC1, TV2, TC3, TC4) which are able to occupy a vertical lowered position in order to retain a batch of order items on the forward part of the conveyor belt and to occupy a raised position in order to release and move the batch of order items towards the exit of the conveyor belt.

6. System according to claim 4 or 5 **characterised by** the fact that it has, at each level of collecting conveyor belt (TC2, TC3, TC4) except the highest collecting conveyor belt (TC1), horizontal evacuation conveyor belts (TE6, TE4, TE5, TE1, TE2, TE) arranged in series with the collecting conveyor belts (TC2, TC3, Tc4) in order to ensure that batches of items of an order on the collecting conveyor belts are evacuated on to the inclined conveyor belt (TR).

7. System according to claim 6 **characterised by** the fact that each evacuation conveyor belt (TE1, TE2, TE3, TE4, TE5, TE6) has at its exit a controlled movable flap (VE1, VE2, VE3, VE4, VE5, VE6) situated crosswise over the conveyor belt and able to occupy a vertical lowered position in order to retain a batch of order items arranged one after the other across the conveyor belt and to occupy a raised position in order to release and move a batch of order items towards the inclined conveyor belt (TR).

8. System according to claim 6 or 7 **characterised by** the fact that the highest collecting conveyor belt (TC1) has its exit adjacent to the inclined conveyor belt (TR) and includes a controlled ramp which can be lowered (RR) between the collecting conveyor belt (TC1) and the conveyor belt (TR) in order to permit the passage of a batch of order items on the inclined conveyor belt (TR) and that each evacuation conveyor belt (TE5, TE6) adjacent to the inclined conveyor belt (TR), except the lowest evacuation conveyor belt (TE3), has a controlled ramp which can be lowered (RP5, RP6) to permit the passage of a batch of items of an order on the inclined conveyor belt (TR).

9. System according to claim 7 or 8 **characterised by** the fact that the computer (DO) guides the ejectors (7) of the stores (1) of the different sections of the stores (A, B, C, D) in order to discharge batches of items of an initial order on to the collecting conveyor belts (TC1, TC2, TC3, TC4) upwards of their intermediate lowered movable flaps (V11, V21, V31, V41) and then brings the intermediate movable flaps (V11, V21, V31, V41) to their raised position so that the collecting conveyor belts (TC1, TC2, TC3, TC4) move the batches of items of the order to the exit of these conveyor belts where the batches of items are retained by the corresponding lowered movable exit flaps (V1, V2, V3, V4).

10. System according to claim 9 **characterised by** the fact that the computer (DO) again guides the ejectors (7) of the stores (1) of the different sections of the stores (A, B, C, D) in order to discharge batches of items of a second order on to the collecting conveyor belts (TC1, TC2, TC3, TC4) upwards of their intermediate movable flaps (V11, V21, V31, V41) brought into a lowered position.

11. System according to claim 9 or 10 **characterised by** the fact that the computer (DO) guides the exit flaps (V2, V3, V4) of the collecting conveyor belts (TC2, TC3, TC4) to their raised position for the release of batches of items of the initial order so that the collecting conveyor belts (TC2, TC3, TC4) discharge the batches of items on to the evacuation conveyor belts (TE6, TE4, TE1) and the computer (DO) then guides the movable flaps (VE4, VE1, VE2) at the exit of the evacuation conveyor belts (TE4, TE1, TE2) to their raised position for the release of batches of items of the first order until these batches of items arrive on the evacuation conveyor belts (TE6, TE5, TE3) adjacent to the inclined rearrangement conveyor belt where they are retained by the lowered flaps (VE6, VE5, VE3) at the exit of these latter evacuation conveyor belts, the batch of items of the first order on the higher collecting conveyor belt (TC1) being retained by the exit flap (V1) of this collecting conveyor belt adjacent to the inclined rearrangement conveyor belt (TR).

12. System according to claim 11 **characterised by** the fact that the computer (DO) successively guides the exit flat (V1) of the higher collecting conveyor belt (TC1) and the exit flaps (VE6, VE5, VE3) of the evacuation conveyor belts (TE6, TE5, TE3) adjacent to the inclined rearrangement conveyor belt as well as the ramps (RP1, RP6, RP5) to their lowered position in order to ensure that the batches of items of the first order are sequentially deposited on the higher collection conveyor belt (TC1) and the evacuation conveyor belts (TE6, TE5, TE3) on the inclined conveyor belt (TR) and rearrange them on the latter in a sequence corresponding to the sequence of the order, the inclined rearrangement conveyor belt (TR) having at its upper end a controlled movable flap (VR) situated crosswise over the latter and able to occupy a vertical lowered position in order to retain the rearranged batches of items of the first order and to occupy a raised position in order to release and move the rearranged batches of items of the first order towards the packaging machine.

13. System according to claim 12 when considered together with claim 10, **characterised by** the fact that, once the batches of items of the first order have been evacuated to the packaging machine, the computer (DO) guides the intermediate movable flaps (V11, V31, V41) of the collecting conveyor belts (TC1, TC2, TC3, TC4) to their raised position so that these conveyor belts move the batches of items of the second order until they are retained by the lowered flaps (V1, V2, V3, V4) at the exit of the collecting conveyor belts and the computer (DO) guides the ejectors (7) of the stores (1) of the different sections of the stores (A), (B), (C) and (D) in order to discharge batches of items of a third order on to the collecting conveyor belts (TC1, TC2, TC3, TC4) upwards of their intermediate movable flaps (V11, V21, V31, V41) brought into a lowered position.

14. System according to claim 13 **characterised by** the fact that the computer (DO) guides the exit flaps (V2, V3, V4) of the collecting conveyor belts (TC2, TC3, TC4), the exit flaps (VE4, VE1, VE2) of the evacuation conveyor belts (TE4), (TE1) and (TE2) of the batches of items of the second order, the exit flap (V1) of the higher collecting conveyor belt (TC1) and the exit flaps (VE6, VE5, VE3) of the evacuation conveyor belts (TE6, TE5, TE3) adjacent to the inclined conveyor belt as well as the ramps (RP1, RP6, RP5) to their raised position in the same way as in the case of the batches of items of the first order in order to rearrange the batches of items (5) of the second order on the inclined conveyor belt (TR) in a sequence corresponding to the sequence of the order for the purposes of directing them towards the packaging machine, this process of guiding the different flaps and ramps by means of the computer (DO) being repeated for the batches of items of the third order and the various following orders.

15. System according to one of the previous claims **characterised by** the fact that the computer (DO) guides the ejectors (7) of the different sections of the stores (A, B, C, D) in a sequential way in order to eject the items of each batch of an order on to each collecting conveyor belt one after the other (TC1, TC2, TC3, TC4) and that the computer (DO) controls the driving motor (M) of each collecting conveyor belt (TC1, TC2, TC3, TC4) at various speeds so that the items to be ejected fall on to the collecting conveyor belt one after the another in close succession.

16. System according to one of the claims 1 to 14 **characterised by** the fact that the computer (DO) guides the ejectors (7) of the different sections of the stores (A, B, C, D) simultaneously in order to ensure that the items of each batch of an order are simultaneously discharged on to each corresponding collecting conveyor belt and orders the driving motor (M) of each collecting conveyor belt (TC1, TC2, TC3, TC4) to move the latter at a fixed speed.

17. System according to one of the previous claims **characterised by** the fact that it has four levels of collecting conveyor belts (TC1, TC2, TC3, TC4) situated below four sections (A, B, C, D) of stores 1 with ejectors (7) arranged in series, each section (A - D) consisting of twenty ejectors (7) making it possible to discharge a batch of similar or dissimilar items of an order on to the associated collecting conveyor belt (TC1), (TC2), (TC3) and (TC4).

18. System according to claim 17 **characterised by** the fact that the length of a collecting conveyor belt (TC1, TC2, TC3, TC4) is greater than the length of a corresponding section of the stores (A, B, C, D).

19. System according to claim 17 when considered together with claim 5, **characterised by** the fact that it has three successive evacuation conveyor belts (TE1, TE2, TE3) situated downwards of the lowest collecting conveyor belt (TC4), two successive evacuation conveyor belts (TE4, TE5) situated upwards of the collecting conveyor belt (TC3) above the lowest collecting conveyor belt (TC4) and an evacuation conveyor belt (TE6) situated downwards of the collecting conveyor belt below the highest collecting conveyor belt (TC1).

20. System according to one of the previous claims **characterised by** the fact that the computer (DO) consists of a supervisor (OS) which receives orders for items from customers and divides each of them into batches of items, a computer (OP) of the (PC) type connected to the supervisor (OS) and making it possible to control the ejectors (7) by means of electronic cards (A...An, B1...Bn, C1...Cn, D1...Dn), an automaton (AT1) controlled by the computer (OP) and intended to control the different flaps and ramps associated with the collecting and evacuation conveyor belts and the flap (VR) associated with the inclined conveyor belt (TR) as well as the driving motors (M) of these conveyor belts and another automaton (AT2) controlled by the computer (OP) for the control of the packaging machine (5).

## Patentansprüche

**1.** Automatisches Ausgabesystem von Artikeln (5) zum Kommissionieren eines bzw. mehrerer Bestellaufträge solcher Artikel, mit einer Anzahl von Magazinen (1), die nacheinander in Reihe angeordnet sind und jeweils einen Stapel von auszugebenden Artikeln aufweisen, mit Auswerfern (7), die sich unter den jeweiligen Magazinen (7) befinden und von denen einige angesteuert werden können, um zu einem Auftrag gehörende Artikel (5) auszuwerfen, mit zumindest einem Sammelförderband (TC1; TC2; TC3; TC4) zum Sammeln der ausgeworfenen Artikel des Auftrags, das es ermöglicht, die gesammelten Artikel zu einer Artikelverpackungsstelle (5) zu fördern, wobei die Magazine (1) und deren zugeordnete Auswerfer (7) in zwei oder mehrere Magazinabschnitte mit Auswerfern unterteilt sind, **dadurch gekennzeichnet, dass** es zwei oder mehrere horizontale Sammelförderbänder (TC1, TC2, TC3, TC4) aufweist, deren Anzahl gleich der der Abschnitte (A, B, C, D) der Magazine (1) ist und die gestuft parallel übereinander angeordnet sind, um Sammelbandniveaus (TC1, TC2, TC3, TC4) zu bilden, die sich unter den jeweiligen Magazinabschnitten (A, B, C, D) befinden, und mit einer Computervorrichtung (DO), welche die zu verarbeitenden Artikelbestellaufträge empfängt und jeden Auftrag in eine Anzahl von Artikellose unterteilt, die zumindest gleich der beiden Magazinabschnitte ist, und die Auswerfer (7) der Magazine dieser Abschnitte so ansteuert, dass die Artikel eines jeden Loses des Auftrags auf jedes entsprechende Sammelförderband gekippt werden.

**2.** System nach Anspruch 1, **dadurch gekennzeichnet, dass** die Computervorrichtung (DO) jeden Auftrag in ebenso viele Artikellose aufteilt, wie Magazinabschnitte (1) vorhanden sind.

**3.** System nach Anspruch 1 oder 2, **dadurch gekennzeichnet, dass** es ein nach oben geneigtes Förderband (TR) enthält, das dazu bestimmt ist, die Artikellose (5) eines Auftrags zu empfangen und zusammenzuführen, die von den Sammelförderbändern (TC1, TC2 TC3, TC4) kommen, und sie auf ein Förderband (TR) zu leiten, welches die Artikellose des Auftrags zur Einpackeinrichtung transportiert.

**4.** System nach Anspruch 3, **dadurch gekennzeichnet, dass** jedes Sammelförderband (TC1; TC2; TC3; TC4) an seinem Austrittsende eine gesteuert bewegliche Klappe (V1; V2; V3; V4) enthält, die sich quer oberhalb des Förderbands erstreckt und eine vertikale Klappstellung zum Halten eines Loses von Artikeln (5) eines Auftrags einnehmen kann, die hintereinander angeordnet sind, indem sie in ihrer Länge quer zum Förderband ausgerichtet sind, sowie eine angehobene Stellung zum Freigeben und Verlagern des Artikelloses zum geneigten Förderband (TR).

**5.** System nach Anspruch 4, **dadurch gekennzeichnet, dass** jedes Sammelförderband (TC1, TC2, TC3, TC4) eine gesteuert bewegliche Zwischenklappe (V11; V21; V31; V41) enthält, die sich quer oberhalb des Förderbandes erstreckt, indem sie sich in der durch die Mitte des entsprechenden Magazinabschnitts (A, B, C, D) verlaufenden Senkrechten befindet, so dass sie zwei Abschnittshälften oberhalb eines jeden Sammelförderbandes (TC1, TC2, TC3, TC4) bildet, und die eine vertikale Klappstellung zum Halten eines Loses von Artikeln (5) eines Auftrags einnehmen kann, die im vorgelagerten Bereich des Förderbandes vorliegen, sowie eine angehobene Stellung zum Freigeben und Verlagern des Artikelloses zum Austritt des Förderbandes.

**6.** System nach Anspruch 6, **dadurch gekennzeichnet, dass** jedes Abführförderband (TE1, TE2, TE3, TE4, TE5, TE6) an seinem Austritt eine gesteuert bewegliche Klappe (VE1, VE2, VE3, VE4, VE5, VE6) enthält, die sich quer oberhalb des Förderbands erstreckt und eine vertikale Klappstellung zum Halten eines Loses von Artikeln (5) eines Auftrags einnehmen kann, die hintereinander angeordnet sind und in ihrer Länge quer zum AbführFörderband ausgerichtet sind, sowie eine angehobene Stellung zum Freigeben und Verlagern des Artikelloses zum geneigten Förderband (TR).

**8.** System nach Anspruch 6 oder-7, **dadurch gekennzeichnet, dass** das am höchsten liegende Sammelförderband (TC1 ) mit seinem Austritt an das geneigte Förderband (TR) angrenzt und eine gesteuert umklappbare Rampe (RR) enthält, die sich zwischen dem Sammelband (TC1) und dem Förderband (TR) befindet, um in Umklappstellung den Durchtritt eines Artikelloses eines Auftrags am geneigten Förderband (TR) zu ermöglichen, und dass jedes an das geneigte Förderband (TR) angrenzende Abführförderband (TE5; TE6), abgesehen vom am niedrigsten gelegenen Abführförderband (TE3), eine gesteuert umklappbare Rampe (RP5; RP6) enthält, die in Umklappstellung den Durchtritt eines Artikelloses eines Auftrags auf das geneigte Förderband (TR) ermöglicht.

**9.** System nach Anspruch 7 oder 8, **dadurch gekennzeichnet, dass** die Computervorrichtung (DO) Auswerfer (7) der Magazine (1) der verschiedenen Magazinabschnitte (A, B, C, D) ansteuert, um auf die jeweiligen Sammelförderbänder (TC1, TC2, TC3, TC4) vor deren umgeklappten beweglichen Zwischenklappen (V11, V21, V31, V41) Artikellose eines ersten Auftrags zu kippen, und anschließend die beweglichen Zwischenklappen (V11, V21, V31, V41) ansteuert, um sie in ihre angehobene Stellung zu bringen, so dass die Sammelförderbänder (TC1, TC2, TC3, TC4) die Artikellose des Auftrags zum Austritt dieser Bänder verlagert, wo die Artikellose von den entsprechenden beweglichen, umgeklappten Austrittsklappen (V1, V2, V3, V4) zurückgehalten werden.

**10.** System nach Anspruch 9, **dadurch gekennzeichnet, dass** die Computervorrichtung (DO) erneut Auswerfer (7) der Magazine (1) der verschiedenen Magazinabschnitte (A, B, C, D) ansteuert, um auf die jeweiligen Sammelförderbänder (TC1, TC2, TC3, TC4) vor deren beweglichen, in die umgeklappte Stellung zurückgeführten Zwischenklappen (V11, V21, V31, V41) Artikellose eines zweiten Auftrags zu kippen.

**11.** System nach Anspruch 9 oder 10, **dadurch gekennzeichnet, dass** die Computervorrichtung (DO) die Austrittsklappen (V2, V3, V4) der Sammelförderbänder (TC2, TC3, TC4) in ihre angehobene Stellung zum Freigeben der Artikellose des ersten Auftrags so ansteuert, dass die Sammelbänder (TC2, TC3, TC4) die Artikellose auf die jeweiligen Abführförderbänder (TE6, TE4, TE1) kippt, wonach die Computervorrichtung (DO) die beweglichen Klappen (VE4, VE1, VE2) am Austritt der Abführförderbänder (TE4, TE1, TE2) in ihre angehobene Stellung zum Freigeben der Artikellose des ersten Auftrags ansteuert, bis diese Artikellose zu den an das geneigte Zusammenführband (TR) angrenzenden Abführbändern (TE6, TE5, TE3) gelangen, wo sie von den umgeklappten Klappen (VE6, VE5, VE3) am Austritt dieser Abführbänder zurückgehalten werden, wobei das Los von am höher gelegenen Sammelband (TC1) vorliegenden Artikeln des ersten Auftrags von der Austrittsklappe (V1) dieses Sammelbandes zurückgehalten wird, das an das geneigte Zusammenführband (TR) angrenzt.

**12.** System nach Anspruch 11, **dadurch gekennzeichnet, dass** die Computervorrichtung (DO) nacheinander die Austrittsklappe (V1) des höher gelegenen Sammelbandes (TC1) und die Austrittsklappen (VE6; VE5; VE3) der Abführbänder (TE6; TE5; TE3) ansteuert, die an das geneigte Zusammenführband (TR) angrenzen, sowie die Rampen (RP1; RP6; RP5) in ihre umgeklappte Stellung, um sequentiell die auf dem höher gelegenen Sammelband (TC1) und auf den Abführbändern (TE6, TE5, TE3) vorhandenen Artikellose des ersten Auftrags auf das geneigte Band (TR) abzulegen und sie auf letzterem in einer der Reihenfolge des Auftrags entsprechenden Reihenfolge zusammenzuführen, wobei das geneigte Zusammenführband (TR) an seinem oberen Austrittsende eine gesteuert bewegliche Klappe (VR) enthält, die sich quer oberhalb diesem erstreckt und eine senkrechte, umgeklappte Stellung zum Zurückhalten der zusammengeführten Artikellose des ersten Auftrags und eine angehobene Stellung zum Freigeben und Verlagern der zusammengeführten Artikellose des ersten Auftrags zur Einpackeinrichtung einnehmen kann.

**13.** System nach Anspruch 12 in Kombination mit Anspruch 10, **dadurch gekennzeichnet, dass** nach Abführen der Artikellose des ersten Auftrags zur Einpackeinrichtung die Computervorrichtung (DO) die beweglichen Zwischenklappen (V11, V21, V31, V41) der Sammelbänder (TC1, TC2, TC3, TC4) in ihre angehobene Stellung ansteuert, damit diese Bänder die Artikellose des zweiten Auftrags soweit verlagern, dass sie von den umgeklappten Klappen (V1, V2, V3, V4) am Austritt der Sammelförderbänder zurückgehalten werden, und die Computervorrichtung (DO) Auswerfer (7) der Magazine (1) der verschiedenen Magazinabschnitte (A), (B), (C), (D) ansteuert, um auf die jeweiligen Sammelförderbänder (TC1, TC2, TC3, TC4) vor deren in umgeklappte Stellung gebrachten, beweglichen Zwischenklappen (V11, V21, V31, V41) Artikellose eines dritten Auftrags zu kippen.

**14.** System nach Anspruch 13, **dadurch gekennzeichnet, dass** die Computervorrichtung (DO) die Austrittsklappen (V2, V3, V4) der Sammelförderbänder (TC2, TC3, TC4), die Austrittsklappen (VE4, VE1, VE2) der Abführförderbänder (TE4), (TE1), (TE2) der Artikellose des zweiten Auftrags, die Austrittsklappe (V1) des höher gelegenen Sammelbandes (TC1) und die Austrittsklappen (VE6, VE5, VE3) der Abführbänder (TE6, TE5, TE3), die an das geneigte Band (TR) angrenzen, sowie die Rampen (RP1, RP6, RP5) in ihre umgeklappte Stellung ansteuert, und zwar auf die gleiche Art und Weise wie bei den Artikellosen des ersten Auftrags, um auf dem geneigten Band (TR) die Artikellose (5) des zweiten Auftrags in einer der Reihenfolge des Auftrags entsprechenden Reihenfolge zu vereinen, um sie anschließend zur Einpackeinrichtung zu führen, wobei dieser Ansteuerprozess der verschiedenen Klappen und Rampen durch die Computervorrichtung (DO) für die Artikellose des dritten Auftrags und der verschiedenen weiteren Aufträge wiederholt wird.

**15.** System nach einem der vorangehenden Ansprüche, **dadurch gekennzeichnet, dass** die Computervorrichtung (DO) die Auswerfer (7) der verschiedenen Magazinabschnitte (A, B, C, D) sequentiell ansteuert, um nacheinander die Artikel eines jeden Loses eines Auftrags auf jedes Sammelband (TC1, TC2, TC3, TC4) auszuwerfen, und die Computervorrichtung (DO) den Antriebsmotor (M) eines jeden Sammelbandes (TC1, TC2, TC3, TC4) mit einer veränderlichen Verlagerungsgeschwindigkeit steuert, damit die auszuwerfenden Artikel nahe nacheinander auf das Sammelband fallen.

**16.** System nach einem der Ansprüche 1 bis 14, **dadurch gekennzeichnet, dass** die Computervorrichtung (DO) die Auswerfer (7) der verschiednen Magazinabschnitte (A, B, C, D) gleichzeitig ansteuert, um die Artikel eines jeden Loses eines Auftrags auf jedes entsprechende Sammelband zu kippen, und den Antriebsmotor (M) eines jeden Sammelbandes (TC1, TC2, TC3, TC4) steuert, um dieses mit einer festen Geschwindigkeit zu verlagern.

**17.** System nach einem der vorangehenden Ansprüche, **dadurch gekennzeichnet, dass** es vier Niveaus von Sammelförderbändern (TC1, TC2, TC3, TC4) enthält, die sich unterhalb von vier jeweiligen Abschnitten (A, B, C, D) von Magazinen (1) mit Auswerfen (7) befinden, die in Reihe angeordnet sind, wobei jeder Abschnitt (A - D) zwanzig Auswerfer (7) aufweist, die es ermöglichen, auf das zugeordnete Sammelband (TC1), (TC2), (TC3), (TC4) ein Los von verschiedenen oder gleichen Artikeln eines Auftrags zu kippen.

**18.** System nach Anspruch 17, **dadurch gekennzeichnet, dass** ein Sammelförderband (TC1, TC2, TC3, TC4) länger ist als ein entsprechender Magazinabschnitt (A, B, C, D).

**19.** System nach Anspruch 17 in Kombination mit Anspruch 5, **dadurch gekennzeichnet, dass** es drei aufeinanderfolgende Abführbänder (TE1, TE2, TE3) enthält, die dem untersten Sammelband (TC4) nachgeschaltet sind, wobei zwei aufeinanderfolgende Abführbänder (TE4, TE5) dem Sammelband (TC3) oberhalb des untersten Sammelbandes (TC4) nachgeschaltet sind und ein Abführband (TE6) dem Sammelband unterhalb des am höchsten gelegenen Sammelbandes (TC1) nachgeschaltet ist.

**20.** System nach einem der vorangehenden Ansprüche, **dadurch gekennzeichnet, dass** die Computervorrichtung (DO) eine Überwachung (OS), welche die Artikelbestellaufträge von Kunden empfängt und jeweils in Artikellose aufteilt, einen Computer (OP) vom Typ PC, der mit der Überwachung (OS) verbunden ist und es ermöglicht, die Auswerfer (7) mittels elektronischer Karten (A... An, B1... Bn, C1... Cn, D1... Dn) zu steuern, einen Automaten (AT1), der vom Computer (OP) gesteuert wird und dazu bestimmt ist, die verschiedenen, den Sammel- und Abführbändern zugeordneten Klappen und Rampen und die dem geneigten Band (TR) zugeordnete Klappe (VR) sowie die Antriebsmotoren (M) dieser Bänder zu steuern, und einen weiteren Automaten (AT2), der durch den Computer (OP) gesteuert wird, um die Artikeleinpackeinrichtung (5) zu steuern.
